# EUROPÄISCHE PATENTANMELDUNG

(11) **EP 0 673 180 A2**
(43) Veröffentlichungstag der Anmeldung: **20.09.1995**
(21) Anmeldenummer: 95102016.3
(22) Anmeldetag: 14.02.1995
(51) Int. Cl.: H04Q 11/04

(54) **Teilnehmeranschlussnetz**

(30) Priorität: 21.02.1994 DE 4405460; 28.02.1994 DE 4406509
(71) Anmelder: SIEMENS AKTIENGESELLSCHAFT, D-80333 München (DE)
(72) Erfinder: Huber, Manfred, Dr.-Ing., D-82166 Gräfelfing (DE); Keller, Hendrik, Dr.-Ing., D-80805 München (DE); Neidlinger, Stephan, Dr.-Ing., D-80807 München (DE)

(57) **Zusammenfassung**

In einem bidirektional betreibbaren Teilnehmeranschlußnetz mit jeweils einer Mehrzahl von teilnehmerseitigen Netzabschlußeinheiten gemeinsamen Koaxialleitungs-Baumnetzen und diese Koaxialleitungs-Baumnetze mit Verbindungseinrichtungen verbindenden Lichtwellenleitern sind die Koaxialleitungs-Baumnetze jeweils über eine Konvertereinrichtung an ein optische Verzweiger enthaltendes Lichtwellenleiter-Baumnetz für sowohl bidirektionale Telekommunikationsdienste im Wellenlängengetrenntlagebetrieb als auch unidirektionale Verteilkommunikationsdienste angeschlossen.

## Beschreibung

Neuere Entwicklungen der Fernmeldetechnik führen in der Ebene der Teilnehmeranschlußleitungen zu passiven optischen Telekommunikationssystemen, in denen jeweils eine Mehrzahl von dezentralen Einrichtungen (Teilnehmerstellen oder jeweils eine Mehrzahl von Teilnehmerstellen zusammenfassende sog. Distant Units) jeweils über eine eigene Lichtwellenleiter-Anschlußleitung mit einem optischen Verzweiger verbunden ist, der direkt oder über wenigstens einen weiteren optischen Verzweiger mit einem gemeinsamen Lichtwellenleiteranschluß einer - insbesondere durch eine Vermittlungsstelle gegebenen - zentralen Einrichtung über einen Lichtwellenleiter-Bus verbunden ist (EP-A-0 171 080; ISSLS '88, Conf. Papers 9.4.1...5; BR Telecom Technol. J. 17(1989)2, 100...113).

In einem solchen passiven optischen Telekommunikationsnetz kann die Signalübertragung von der zentralen Einrichtung aus "downstream" zu den dezentralen Einrichtungen hin in einem TDM-Zellenstrom vor sich gehen, aus dem jede dezentrale Einrichtung nur die für ebendiese dezentrale Einrichtung bestimmten Zellen aufnimmt, und die Signalübertragung von den dezentralen Einrichtungen aus "upstream" zur zentralen Einrichtung hin kann in einem TDMA-Verfahren vor sich gehen, demzufolge eine dezentrale Einrichtung einen jeden Burst mit Hilfe einer von der zentralen Einrichtung her einrichtungsindividuell eingestellten Verzögerungseinrichtung synchronisiert aussendet (EP-A-0 460 398).
Die Signalübertragung downstream von der zentralen Einrichtung aus zu den dezentralen Einrichtungen hin und die Signalübertragung upstream von den dezentralen Einrichtungen aus zur zentralen Einrichtung hin kann dabei auch in ein- und demselben Wellenlängenfenster (z.B. im Wellenlängengleichlagebetrieb bei 1,3 µm) vor sich gehen.

Die Einführung neuer Breitbandkommunikationsdienste hängt ganz allgemein ab von Art und Umfang der bereits vorhandenen Fernmeldeinfrastrukturen mit den darin bereitgestellten Telekommunikationsdiensten und von der Nachfrage nach Breitbandtelekommunikationsmöglichkeiten. Dabei wird im Bereich der Privathaushalte das potentiell grösste Anschlußvolumen gesehen; dieses Anschlußpotential konkretisiert sich indessen zu einer effektiven Anschlußnachfrage nicht ohne entsprechend niedrige Kosten eines Breitband-Teilnehmeranschlusses.

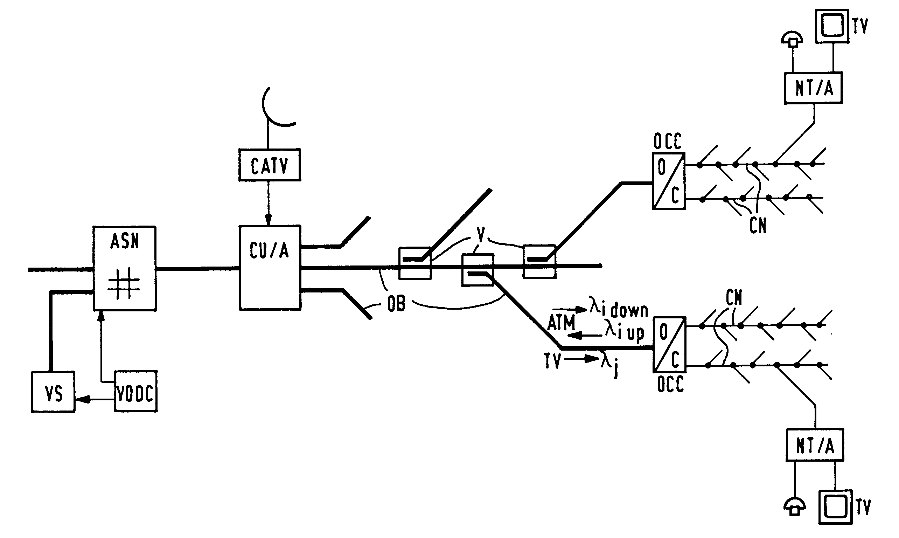

Um einem Teilnehmer die Nutzung von Breitband-ISDN-Diensten (genannt werden z.B. interaktiver Videoabruf Video on Demand (VoD), Teleshopping, Informationsrecherche, aber auch Schmalbanddienste wie (N-)ISDN oder herkömmliche Telefonie (POTS)) zu ermöglichen, werden z.Zt. verschiedene Anschlußmöglichkeiten diskutiert. Besonders attraktiv sind Lösungen, bei denen bereits vorhandene Infrastruktur verwendet werden kann. Ein entsprechendes Medium stellen z.B. die Koaxialkabelnetze der CATV-Anbieter dar: Der Frequenzbereich von 50 - 450 Mhz wird von konventionellen, Analogsignal-Fernsehkanälen genutzt; der Bereich oberhalb der Analogsignal-Fernsehverteilung ist bislang frei und läßt sich für neue Dienste nutzen. In den USA wird von einigen Cable-TV-Gesellschaften ein Teilbereich des bislang freien Bereichs für sog. Cablephone verwendet. Andere Betreiber denken an ein umfassenderes System, das einen Großteil der oben genannten Dienste im Rahmen eines Access-Networks z.B. auf ATM-Basis (AN/A) bietet, wobei in der Regel den koaxialen Teilnetzen wegen der begrenzten Reichweite eine optische Zubringerleitungen (Fiber Feeder) vorgeschaltet sein kann (TELEPHONY, 01.11.93, 48 ... 53).
Man hat auch schon neben einem passiven optischen Netz (PON) mit Erweiterung durch ein Koaxialleitungs-Baumnetz für unidirektionale Verteilkommunikation (TV) ein weiteres passives optisches Netz (PON) für bidirektionale interaktive vermittelte Telekommunikation eingesetzt (Der Fernmeldeingenieur 46(1992)10, Bild 11.2 - System OPAL 4).

Die Erfindung zeigt nun einen Weg zu einer vorteilhafteren Gestaltung eines Teilnehmeranschlußnetzes.

Die Erfindung betrifft ein Teilnehmeranschlußnetz mit jeweils einer Mehrzahl von teilnehmerseitigen Netzabschlußeinheiten gemeinsamen Koaxialleitungs-Baumnetzen und diese Koaxialleitungs-Baumnetze mit Verbindungseinrichtungen verbindenden Lichtwellenleitern; dieses Teilnehmeranschlußnetz ist erfindungsgemäß dadurch gekennzeichnet, daß die Koaxialleitungs-Baumnetze jeweils über eine Konvertereinrichtung an ein optische Verzweiger enthaltendes Lichtwellenleiter-Baumnetz für sowohl bidirektionale Telekommunikationsdienste, vorzugsweise im Wellenlängengetrenntlagebetrieb, als auch unidirektionale Verteilkommunikationsdienste angeschlossen sind.

Die Erfindung ermöglicht eine sehr wirtschaftliche Versorgung einer großen Anzahl von Teilnehmern sowohl mit Verteilkommunikationsdiensten als auch mit interaktiven vermittelten Telekommunikationsdiensten.

In weiterer Ausgestaltung der Erfindung kann das Lichtwellenleiter-Baumnetz ein passives optisches Netz oder ein mit Verstärkern versehenes aktives optisches Netz sein; die einzelnen Koaxialleitungs-Baumnetze können unabhängig davon und von einander verstarkerfreie passive bzw. mit Verstärkern versehene aktive Koaxialleitungs-Baumnetze sein. Diese Flexibilität ermöglicht die Realisierung auch von Netzen mit ganz unterschiedlichen Reichweiten.

Die bidirektionalen bzw. interaktiven Telekommunikationsdienste können in weiterer Ausgestaltung der Erfindung mittels in Form von ATM-Signalen übertragener Digitalsignale durchgeführt werden.
Bei bidirektionaler Digitalsignalkommunikation können die Bitraten von und zum Teilnehmer unterschiedlich sein; jedem Teilnehmer kann die von ihm benötigte Bitrate individuell zugeteilt sein. Auch auf den einzelnen Koaxialleitungsnetzen müssen die Bitraten nicht einheitlich sein, vielmehr können auf jedem Koaxialleitungsnetz auch unterschiedliche Übertragungsbitraten für die beiden Übertragungsrichtungen vorgesehen sein. Auch auf dem Lichtwellenleiter-Baumnetz können die Bitraten der beiden Übertragungsrichtungen unterschiedlich sein; sie sind unabhängig von den Bitraten der Koaxialleitungs-Baumnetze wählbar. Verwenden Lichtwellenleiter-Baumnetz und Koaxialleitungs-Baumnetz unterschiedliche Bitraten, so findet eine Geschwindigkeitsanpassung in der zwischen Lichtwellenleiter-Baumnetz und Koaxialleiter-Baumnetz liegenden Konvertereinrichtung statt.

Weitere Besonderheiten der Erfindung werden aus der nachfolgenden Erläuterung eines Ausführungsbeispiels für ein Telekommunikationssystem gemäß der Erfindung anhand der Zeichnung ersichtlich.

In der Zeichnung ist schematisch in einem zum Verständnis der Erfindung erforderlichen Umfang ein Teilnehmeranschlußnetz gemäß der Erfindung dargestellt. Dabei sind im rechten Teil der Zeichnung Koaxialleiternetze CN in der üblichen Baumstruktur angedeutet, wie sie in der Regel bereits verlegt sein werden.
Teilnehmerseitig sind die Koaxialleiter jeweils mit einer Netzabschlußeinrichtung NT/A abgeschlossen, welche ihre Empfangs- und Sendesignale jeweils derart konvertieren möge, daß der Anschluß gängiger Endgeräte möglich ist; eine Netzabschlußeinrichtung NT/A weist z.B. Anschlüsse für Verteilfernsehen bzw. Video on Demand, für herkömmliche Telefonie (POTS) u./o. Schmalband-ISDN oder auch für einen beliebigen Breitband-ISDN-Dienst auf.
Auf der teilnehmerabgewandten Seite sind die Koaxialleiternetze CN jeweils über eine Opto-/Coax-Konvertereinrichtung (Optical/Coax-Converter) OCC an eine optische Anschlußleitung eines über optische Verzweiger (Splitter) V verzweigten Lichtwellenleiternetzes OB angeschlossen, welches die Koaxialleiternetze mit einer vorzugsweise mit einem (ATM-) CrossConnect gebildeten Verbindungseinrichtung (Connection Unit) CU/A verbindet. An eine solche Verbindungseinrichtung CU/A können, wie dies auch in der Zeichnung angedeutet ist, mehrere derartige Lichtwellenleiternetze OB angeschlossen sein; in entsprechender Weise können, wie dies ebenfalls in der Zeichnung angedeutet ist, an eine Konvertereinrichtung OCC mehrere, z.B. bis zu vier, Koaxialleiter-Subnetze CN angeschlossen sein. Wenn ein Koaxialleiternetz CN den Anschluß von z.B. 100 Teilnehmern ermöglicht, bedient die Konvertereinrichtung OCC z.B. 400 Teilnehmer und die Verbindungseinrichtung (Connection Unit) CU/A z.B. 2000 bis 4000 Teilnehmer.

Die Übertragung im Teilnehmeranschlußnetz kann nach dem Synchronen Transfer-Modus STM oder auf der Basis von ATM-Zellen (cell-based) mit einem systemspezifischen Overhead vor sich gehen. Dabei wird in der Übertragungsrichtung zum Teilnehmer hin (downstream) die Datenrate mit z.B. 622 Mbit/s grösser sein als die Datenrate in der umgekehrten Übertragungsrichtung (upstream) mit z.B. 155 Mbit/s, wobei aus übertragungstechnischer Sicht die downstream-Übertragung in mehreren Kanälen (z.B. in vier Kanälen à 155 Mbit/s) vor sich gehen kann.

In dem in der Zeichnung skizzierten System werden analoge TV-Verteilsignale von einer Kopfstelle (CATV Headend) her in die den angeschlossenen Teilnehmern gemeinsame Verbindungseinrichtung (Connection Unit) CU/A eingespeist und zu allen angeschlossenen Teilnehmern hin übertragen. Diese Fernsehsignale können beim Teilnehmer von einem an dessen Netzabschlußeinrichtung NT/A angeschlossenen, in der Zeichnung mit TV bezeichneten Fernsehempfänger in üblicher Weise empfangen werden.

Neben den analogen TV-Signalen mögen in dem in der Zeichnung skizzierten Telekommunikationssystem der Verbindungseinrichtung (Connection Unit) CU/A digitale Signale im ATM-Format zugeführt werden. Solche Signale können z.B. digitale Videosignale eines (auch einen ATM-Rückkanal für die Programmwahl durch den TV-Teilnehmer einschliessenden) Video-on-Demand-Dienstes oder auch breitbandige interaktive Datensignale sein, wobei die digitalen Videosignale mittels eines entsprechenden, in der Zeichnung nicht gesondert dargestellten Zusatzgerätes (Set-Top-Box) ebenfalls vom Fernsehempfänger TV empfangen werden.

Des weiteren können in dem in der Zeichnung skizzierten System in beiden Richtungen schmalbandige ATM-Sprach- und ggf. auch Datensignale übertragen werden, was in der Zeichnung durch ein an die Netzabschlußeinrichtung NT/A angeschlossenes Telefon angedeutet wird. Weitere Dienste, welche den Anschluß weiterer Endgeräte an die jeweilige Netzabschlußeinrichtung NT/A erfordern können, sind möglich, ohne daß dies in der Zeichnung noch dargestellt werden müsste.

Die ATM-Signale werden über eine ATM-Vermittlungseinrichtung ASN geleitet. Für Video-On-Demand ist dabei ein Video-Server VS erforderlich, in welchem die abzurufenden Video-Programme (Filme) gespeichert sind, und zwar in der Regel in digitaler und datenkomprimierter Form, beispielsweise nach dem bei ISO-MPEG erarbeiteten MPEG2-Algorithmus mit z.B. 4 Mbit/s. Der Server VS möge von einem Controller VODC gesteuert werden, welcher von den angeschlossenen Teilnehmern über den jeweiligen Rückkanal kommende Signalisierungsinformationen auswertet und sowohl die Programmausgabe aus dem Video-Server VS als auch die ATM-Koppeleinrichtung ASN entsprechend steuert.

Die generelle Verwendung des Asynchronen Transfer-Modus (ATM) für die digitalen Signale aller Dienste (mit Ausnahme des auf Analogsignalübertragung basierenden TV-Verteildienstes) ist auf Grund seiner hohen Flexibilität außerordentlich vorteilhaft. Es lassen sich Signale mit unterschiedlichen, beliebigen Datenraten beliebig mischen; eine Wahl von Datenraten entsprechend bestimmten Hierarchiestufen ist überflüssig. Dies ist insbesondere auch für Videoübertragung sehr interessant, da zum einen eine allgemein vereinbarte Datenrate für ein Videosignal ohnehin nicht existiert und zum andern durch Wahl unterschiedlicher Datenraten unterschiedliche Bildqualitäten geboten werden können. Dies ist insbesondere im Zusammenhang mit einer skalierbaren Codierung interessant, wobei den Teilnehmern wahlweise (zu unterschiedlichem Preis) eine hohe Qualität, etwa durch ein HDTV-Signal mit einer hohen Datenrate, oder eine niedrigere Qualität, etwa durch ein TV-Signal mit 625-Zeilen-Auflösung, geboten werden kann.

Im Rahmen des ATM-Systems kann, in upstream-Richtung gesehen, das Koaxialleiter-Baumnetz (CN) als Virtual-Channel-Multiplexer bzw. -Konzentrator und das Lichtwellenleiter-Baumnetz (OB) als Virtual-Path-Multiplexer bzw. -Konzentrator arbeiten; in downstream-Richtung gesehen arbeiten die genannten Teilnetze dann als entsprechende Demultiplexer bzw. Dekonzentratoren. Das ATM-System umfasst damit also teilnehmerindividuelle virtuelle Kanäle und konvertereinrichtungsindividuelle virtuelle Pfade. Die Erfindung ist indessen nicht auf eine solche Konfiguration beschränkt; es sind vielmehr auch andere Varianten möglich. So kann, in upstream-Richtung gesehen, bei teilnehmerindividuellen virtuellen Pfaden bereits das Koaxialleiter-Baumnetz (CN) als Virtual-Path-Multiplexer bzw. -Konzentrator arbeiten; andererseits kann aber bei konvertereinrichtungsindividuellen virtuellen Kanälen auch das Lichtwellenleiter-Baumnetz (OB) noch als Virtual-Channel-Multiplexer bzw. -Konzentrator arbeiten.

Der Zugriff der Teilnehmer (NT/A) auf das Netz unterliegt einer TDMA-Zugriffsprozedur; solche TDMA-Zugriffsprozeduren sind (beispielsweise aus Intern. J. of Digital and Analog Communication Systems, 6(1993), 143 ... 149,) bekannt und brauchen hier nicht weiter erläutert zu werden, zumal dies zum Verständnis der Erfindung nicht erforderlich ist. Die Zugriffsprozedur für den TDMA-Zugriff auf das Netz in upstream-Richtung kann für das ganze Teilnehmeranschlußnetz CN, OB wirksam sein. Alternativ dazu sind für das Lichtwellenleiter-Baumnetz und einzelne Koaxialleiter-Baumnetze auch separate Zugriffsprozeduren für den TDMA-Zugriff in upstream-Richtung möglich, wobei der Zugriff auf das Lichtwellenleiter-Baumnetz von der entsprechend ausgestatteten jeweiligen Konvertereinrichtung OCC bewirkt wird.

Die Konvertereinrichtungen OCC können auch zur Erfüllung weiterer, ggf. auch unterschiedlicher Funktionen ausgestattet sein, beispielsweise zu einer Geschwindigkeitsanpassung zwischen Lichtwellenleiter-Baumnetz OB und Koaxialleiter-Baumnetz CN. Eine Geschwindigkeitsanpassung kann etwa mit Hilfe von Multiplexern/Demultiplexern mit mit unterschiedlichen Geschwindigkeiten ein- und ausgelesenen Pufferspeichern geschehen, was hier indessen nicht näher erläutert werden muß, da dies zum Verständnis der Erfindung nicht mehr erforderlich ist.

Die Trennung der interaktiven Telekommunikationsdienste von den Verteildiensten geschieht in der Regel durch Wellenlängenmultiplex: Wie dies auch in der Zeichnung angedeutet ist, werden die Signale der interaktiven Dienste auf Wellenlängen λ_{i down} und λᵢ up und diejenigen der Verteildienste auf Wellenlängen λⱼ transportiert. Dabei ist durch die Indices i und j angedeutet, daß das Wellenlängenmultiplexprinzip nicht nur zur Dienstetrennung, sondern ggf. auch zur Kapazitätserhöhung Anwendung finden kann. Jeder Konvertereinrichtung kann dabei ein oder mehrere Wellenlängenpaar(e) individuell zugeordnet sein.

## Patentansprüche

1. Bidirektional betreibbares Teilnehmeranschlußnetz mit jeweils einer Mehrzahl von teilnehmerseitigen Netzabschlußeinheiten (NT/A) gemeinsamen Koaxialleitungs-Baumnetzen (CN) und diese Koaxialleitungs-Baumnetze (CN) mit Verbindungseinrichtungen (CU/A) verbindenden Lichtwellenleitern (OB),
**dadurch gekennzeichnet,**
daß die Koaxialleitungs-Baumnetze (CN) jeweils über eine Konvertereinrichtung (OCC) an ein optische Verzweiger (V) enthaltendes Lichtwellenleiter-Baumnetz (OB) für sowohl bidirektionale Telekommunikationsdienste als auch unidirektionale Verteilkommunikationsdienste angeschlossen sind.

2. Teilnehmeranschlußnetz nach Anspruch 1,
**dadurch gekennzeichnet,**
daß bidirektionale Telekommunikation im Wellenlängengetrenntlagebetrieb durchgeführt wird.

3. Teilnehmeranschlußnetz nach Anspruch 2,
**dadurch gekennzeichnet,**
daß jeder Konvertereinrichtung (OCC) wenigstens ein Wellenlängenpaar zugeordnet ist.

4. Teilnehmeranschlußnetz nach einem der Ansprüche 1 bis 3,
**dadurch gekennzeichnet,**
daß die bidirektionalen Telekommunikationsdienste mittels in Form von ATM-Signalen übertragener Digitalsignale durchgeführt werden.

5. Teilnehmeranschlußnetz nach Anspruche 4,
**dadurch gekennzeichnet,**
daß auch unidirektionale Telekommunikationsdienste mittels in Form von ATM-Signalen übertragener Digitalsignale durchgeführt werden.

6. Teilnehmeranschlußnetz nach einem der Ansprüche 4 oder 5,
**dadurch gekennzeichnet,**
daß Koaxialleiter-Baumnetz (CN) und/oder Lichtwellenleiter-Baumnetz (OB) in upstream-Richtung als Virtual-Channel-Multiplexer bzw. -Konzentrator arbeiten.

7. Teilnehmeranschlußnetz nach einem der Ansprüche 4 bis 6,
**dadurch gekennzeichnet,**
daß Koaxialleiter-Baumnetz (CN) und/oder Lichtwellenleiter-Baumnetz (OB) in upstream-Richtung als Virtual-Path-Multiplexer bzw. -Konzentrator arbeiten.

8. Teilnehmeranschlußnetz nach Anspruch 6 und 7,
**dadurch gekennzeichnet,**
daß Koaxialleiter-Baumnetz (CN) in upstream-Richtung als Virtual-Channel-Multiplexer bzw. -Konzentrator und Lichtwellenleiter-Baumnetz (OB) in upstream-Richtung als Virtual-Path-Multiplexer bzw. -Konzentrator arbeiten.

9. Teilnehmeranschlußnetz nach einem der Ansprüche 1 bis 8,
**gekennzeichnet durch**
eine für das ganze Teilnehmeranschlußnetz (OB, CN) wirksame Zugriffsprozedur für einen TDMA-Zugriff auf das Netz in upstream-Richtung.

10. Teilnehmeranschlußnetz nach einem der Ansprüche 1 bis 8,
**gekennzeichnet durch**
für das Lichtwellenleiter-Baumnetz (OB) und die einzelnen Koaxialleiter-Baumnetze (CN) separate Zugriffsprozeduren für einen TDMA-Zugriff auf das Netz in upstream-Richtung.

11. Teilnehmeranschlußnetz nach einem der Ansprüche 1 bis 3,
**dadurch gekennzeichnet,**
daß die bidirektionalen Telekommunikationsdienste mittels in Form von STM-Signalen übertragener Digitalsignale durchgeführt werden.

12. Teilnehmeranschlußnetz nach Anspruche 11,
**dadurch gekennzeichnet,**
daß auch unidirektionale Telekommunikationsdienste mittels in Form von STM-Signalen übertragener Digitalsignale durchgeführt werden.

13. Teilnehmeranschlußnetz nach einem der vorhergehenden Ansprüche,
**gekennzeichnet durch**
koaxialleitungsbaumnetzindividuelle Bitraten.

14. Teilnehmeranschlußnetz nach einem der vorhergehenden Ansprüche,
**gekennzeichnet durch**
unterschiedliche Bitraten für die beiden Übertragungsrichtungen.

15. Teilnehmeranschlußnetz nach einem der vorhergehenden Ansprüche,
**gekennzeichnet durch**
teilnehmerindividuell zugeteilte Bitraten.

16. Teilnehmeranschlußnetz nach einem der vorhergehenden Ansprüche,
**gekennzeichnet durch**
eine Geschwindigkeitsanpassung in der zwischen Lichtwellenleiter-Baumnetz (OB) und Koaxialleiter-Baumnetz (CN) liegenden Konvertereinrichtung (OCC).

17. Teilnehmeranschlußnetz nach einem der Ansprüche 1 bis 16,
**dadurch gekennzeichnet,**
daß wenigstens eines der Koaxialleitungs-Baumnetze (CN) ein verstärkerfreies passives Koaxialleitungs-Baumnetz ist.

18. Teilnehmeranschlußnetz nach einem der Ansprüche 1 bis 17,
**dadurch gekennzeichnet,**
daß wenigstens eines der Koaxialleitungs-Baumnetze (CN) ein mit Verstärkern versehenes aktives Koaxialleitungs-Baumnetz ist.

19. Teilnehmeranschlußnetz nach Anspruch 17 oder 18,
**dadurch gekennzeichnet,**
daß das Lichtwellenleiter-Baumnetz (OB) ein passives optisches Netz ist.

20. Teilnehmeranschlußnetz nach Anspruch 17 oder 18,
**dadurch gekennzeichnet,**
daß das Lichtwellenleiter-Baumnetz (OB) ein mit Verstärkern versehenes aktives optisches Netz ist.
